# EUROPÄISCHE PATENTSCHRIFT

(11) **EP 2 711 200 B1**
(45) Veröffentlichungstag und Bekanntmachung des Hinweises auf die Patenterteilung: **18.01.2017**
(21) Anmeldenummer: 13180011.2
(22) Anmeldetag: 12.08.2013
(51) Int. Cl.: B60C 11/03, B60C 11/04, B60C 11/12, B60C 11/13

(54) **Fahrzeugluftreifen**
Pneumatic tyre for a vehicle
Pneu de véhicule

(30) Priorität: 20.09.2012 DE 102012108847
(43) Veröffentlichungstag der Anmeldung: 26.03.2014
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 1 580 032
- EP-A1- 2 281 698
- GB-A- 2 038 729

## Beschreibung

Die Erfindung betrifft einen Fahrzeugluftreifen mit einem Laufstreifenprofil, welches durch Umfangsrillen und in Umfangsrichtung umlaufende Profilpositive, wie Profilbänder und/oder Profilblockreihen, gegliedert ist, wobei zumindest ein Profilpositiv vorgesehen ist, in welchem Querrillen angeordnet sind, die in eine das Profilpositiv begrenzende Umfangsrille münden und deren Enden sich innerhalb des Profilpositives befinden, wobei die Querrillen an der Oberfläche des Profilpositives von Begrenzungskanten begrenzt sind, deren gegenseitiger Abstand in Richtung Umfangsrille größer wird.

Fahrzeugluftreifen mit derartigen Laufstreifenprofilen sind in verschiedenen Ausführungen bekannt. Die sich in die Profilpositive hinein erstreckenden Querrillen weisen üblicherweise einen U-förmigen Querschnitt auf und enden stumpf innerhalb des Profilpositives. Die Endbereiche der Querrillen sind meist von einer Art Stirnwand begrenzt, welche sich in radialer Richtung ausgehend vom Rillengrund bis zur Oberfläche des Profilpositives erstreckt und derart das stumpfe Ende der Querrille bildet.

Ein Fahrzeugluftreifen der eingangs genannten Art ist beispielsweise aus der EP 1 580 032 A1 bekannt. Der Laufstreifen dieses Reifens weist Laufstreifenbänder oder Blockreihen auf, welche mit Sackrillen als Querrillen versehen sind, die sich von einer Umfangsnut ausgehend in das Laufstreifenband oder einen Profilblock erstrecken und zur Abrollrichtung des montierten Reifens unter einem spitzen Winkel geneigt verlaufen. Diese Sackrillen besitzen jeweils eine der gewählten Abrollrichtung zugewandte Nutflanke und dieser gegenüberliegend eine der Abrollrichtung abgewandte Nutflanke. Die der Abrollrichtung abgewandte Nutflanke weist eine Flankenfläche auf, deren Neigung sich gegenüber der radialen Richtung über ihre Erstreckung kontinuierlich ändert, sodass die Flankenfläche bei der Umfangsnut ihren größten Winkel mit der radialen Richtung einschließt. Die gegenüberliegende Flankenfläche verläuft zumindest im Wesentlichen in radialer Richtung.

Fahrzeugluftreifen, die auch bei hohen Geschwindigkeiten eine gute Übertragung von Lenkkräften, Antriebs- und Bremskräften aufweisen sollen, brauchen Profilpositive im Laufstreifen, die eine vergleichsweise hohe Umfangs- und Quersteifigkeit sicherstellen. Bei herkömmlichen Profilausgestaltungen ergibt sich oft ein Zielkonflikt zwischen einer Optimierung des Trockenhandlings, demnach einer guten Kraftübertragung, und einer Optimierung des Nasshandlings, sprich den Entwässerungseigenschaften und dem Aquaplaningverhaltens des Reifens. Maßnahmen zur Verbesserung des Trockenhandlings haben üblicherweise eine Verschlechterung des Nasshandlings zur Folge. Für ein gutes Nasshandling ist es vorteilhaft, wenn die Querrillen eine große Breite aufweisen, um eine gute Entwässerung des Laufstreifens in Richtung der Umfangsrillen sicherzustellen. Je breiter die Querrillen, umso geringer ist der Positivanteil der Profilelemente, wodurch die Steifigkeit der Profilelemente leidet.

Der Erfindung liegt daher die Aufgabe zugrunde, einen Laufstreifen eines Fahrzeugluftreifens der eingangs genannten Art derart auszuführen, dass der oben erwähnte Zielkonflikt zwischen Trockenhandling und Nasshandling möglichst gut gelöst wird.

Gelöst wird die gestellte Aufgabe erfindungsgemäß durch die Merkmale des kennzeichnenden Teiles des Anspruches 1.

Durch diese spezielle Ausgestaltung der Querrillen mit einer Basisrille und Rillenflanken zur Oberfläche des Profilpositives wird im oberflächennahen Bereich des Profilpositives der Negativanteil des Laufstreifens vergrößert, ohne dass die Steifigkeit des Profilpositives reduziert wird. Mit erfindungsgemäßen Querrillen kann daher im oberflächennahen Bereich eine vergleichsweise große Menge an Wasser zur Umfangsrille, die eine Hauptentwässerungsquelle darstellt, geleitet werden. Durch die spezielle Anordnung der Rillenflanken wird die "Kantenfunktion" der Querrillen, speziell beim Nassbremsen, verstärkt. Die nicht auf volle Rillentiefe verlaufenden Rillenflanken stabilisieren die Begrenzungskanten der Querrillen an der Oberfläche des Profilpositives und verhindern das Entstehen von Einrolleffekten. Die schmalen Basisrillen tragen zur Stabilisierung des Profilpositives bei und haben darüber hinaus eine "Gelenkfunktion", beim Abrollen des Reifens erleichtern sie eine Abplattung des Reifens im Footprint.

Für eine optimale Entwässerungswirkung erfindungsgemäßer Querrillen ist eine möglichst verwirbelungsfreie Durchströmung erfindungsgemäßer Querrillen von Vorteil, was gemäß der Erfindung dadurch unterstützt wird, dass der radiale Abstand der zwischen der einen Basisrillenwand und der anschließenden Rillenflanke gebildeten gemeinsamen Kante zur Oberfläche des Profilpositives an der Umfangsrille 3 mm bis 5 mm beträgt, und dass ferner der radiale Abstand der zwischen der über die Basisrille hinausragenden anderen Basisrillenwand und der zweiten Rillenflanke gebildeten gemeinsamen Kante zur Oberfläche des Profilpositives an der Umfangsrille 2 mm bis 3 mm beträgt. Es ist daher auch vorteilhaft, wenn in einem Profilband die Querrillen derart angeordnet werden, dass diese unterschiedlich ausgeführten Rillenflanken bei einem Teil der Querrillen an die einlaufenden Kanten und bei einem Teil der Querrillen an die auslaufenden Kanten anschließen. Die Rillenflanken weisen am inneren Ende der Basisrille einen etwa gleich großen radialen Abstand zur Oberfläche des Profilpositives auf, welcher kleiner ist als die radialen Abstände der erwähnten gemeinsamen Kanten an der Umfangsrille und vorzugsweise höchstens 1 mm beträgt. Demnach weist die Querrille die für eine gute Entwässerung maßgeblichen Merkmale, nämlich eine zur Umfangsrille zunehmende Tiefe und eine zur Umfangsrille zunehmende Breite, auf.

Für die Stabilität des Profilpositives ist es ferner vorteilhaft, wenn die Rillenflanken unter zumindest im Wesentlichen gleich großen Winkeln relativ zur radialen Richtung geneigte Flächen sind.

Die an der Oberfläche des Profilpositives verlaufenden Begrenzungskanten der Querrille verlaufen gemäß einer weiteren bevorzugten Ausführungsform der Erfindung am Querrillenende spitz zusammen. Diese Maßnahme sorgt vor allem für eine Stabilisierung der laufstreifeninnenseitigen Endbereiche der Querrillen bei den im Betrieb des Reifens auftretenden Kräften.

Eine weitere erfindungsgemäße Maßnahme, die die Entwässerungswirkung der erfindungsgemäßen Querrillen optimiert, besteht darin, dass die Rillenflanken in der axialen Erstreckungsrichtung der Basisrille über deren Ende im Profilpositiv hinaus bis zum Schnittpunkt der Begrenzungskanten, die an der Oberfläche des Profilpositives vorliegen, verlaufen.

Die Wirkungswiese erfindungsgemäßer Querrillen wird durch eine weitere Maßnahme für die beiden möglichen Abrollrichtungen des Reifens optimiert, nämlich dadurch, dass die an der Oberfläche des Profilpositives vorgesehenen Begrenzungskanten unterschiedlich große spitze Winkel zur Mittellinie der Basisrille aufweisen.

Bei erfindungsgemäß ausgeführten Rillen gibt es einen optimalen Bereich der Erstreckung der Basisrille, um die "Gelenkwirkung", wie oben erwähnt, der Querrillen sicherzustellen und gleichzeitig für eine gute Steifigkeit des Profilpositives und eine gute Entwässerungswirkung der Querrillen zu sorgen. Die diesbezüglich vorteilhafte Erstreckungslänge der Basisrille beträgt zwischen 50 % und 80 % der gesamten Erstreckungslänge der Querrille.

Die Anordnung erfindungsgemäßer Querrillen in einem beidseitig von Umfangsrillen begrenzten Profilband des Laufstreifens erfolgt insbesondere derart, dass die Querrillen in Umfangsrichtung abwechselnd in die eine und in die andere Umfangsrille münden. Diese Maßnahme ist für die Steifigkeit des Profilbandes und gute Entwässerungseigenschaften vorteilhaft.

Die Querrillen werden ferner gegenüber der axialen Richtung derart angeordnet, dass sie unter einem Winkel von bis zu 50° zu dieser verlaufen. Diese Maßnahme ist günstig für eine Minimierung des Abrollgeräusches.

Sowohl für ein gutes Trockenhandling als auch ein gutes Nasshandling ist es ferner vorteilhaft, wenn im Laufstreifen zumindest ein Profilband vorgesehen ist, in welchem sämtliche Querrillen unter im Wesentlichen übereinstimmenden Winkeln zur axialen Richtung verlaufen.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Schrägansicht eines Abschnittes eines Profilbandes mit einer erfindungsgemäß ausgeführten Querrille,
Fig. 2 eine Draufsicht auf den Abschnitt des Profilbandes aus Fig. 1,
Fig. 3 eine Schnittdarstellung gemäß der Schnittlinie III-III der Fig. 2,
Fig. 4 eine Schnittdarstellung gemäß der Schnittlinie IV-IV der Fig. 2,
Fig 5 eine Schnittdarstellung gemäß der Schnittlinie V-V der Fig. 2,
Fig. 6 eine Schnittdarstellung gemäß der Schnittlinie VI-VI der Fig. 2,
Fig. 7 eine Ansicht eines Abschnittes einer das Profilband begrenzenden Rillenwand in Richtung des Pfeiles P der Fig. 2 und
Fig. 8 eine Draufsicht auf einen Umfangsabschnitt eines Profilbandes mit mehreren gemäß der Erfindung ausgeführten Querrillen.

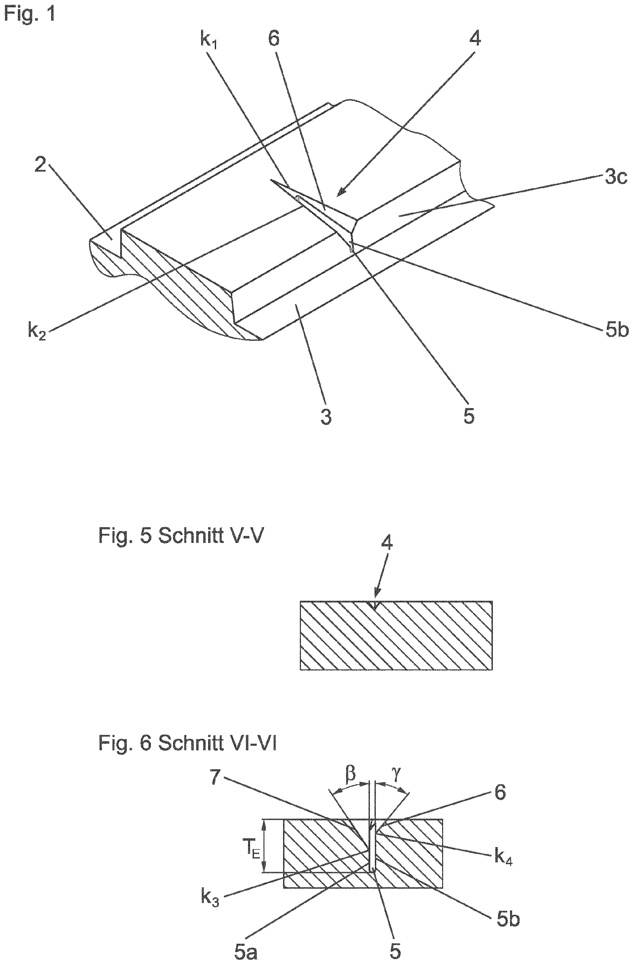

Die Figuren 1, 2 und 8 zeigen jeweils einen in Umfangsrichtung eines Laufstreifenprofils eines PKW-Fahrzeugluftreifens in radialer Bauart verlaufenden Abschnitt eines Profilbandes 1. Das Profilband 1 weist eine Breite von insbesondere 2 cm bis 3,5 cm auf ist von je einer das Laufstreifenprofil in Umfangsrichtung gerade umlaufenden Umfangsrille 2, 3 begrenzt.

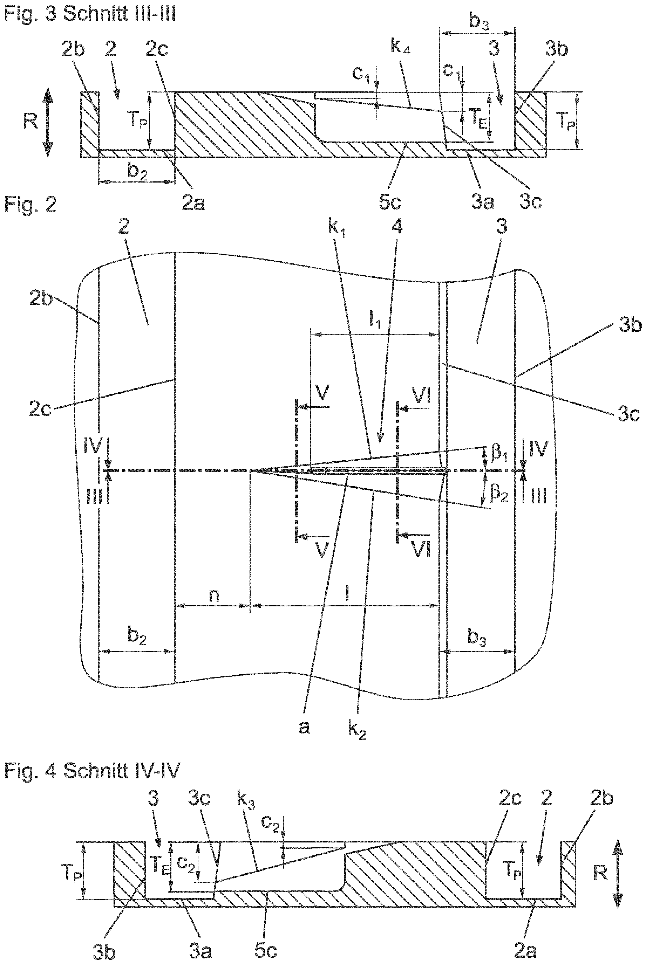

Seitlich der Umfangsrillen 2, 3 schließen weitere Profilpositive an, die in Fig. 2 lediglich angedeutet sind. Diese Profilpositive können ebenfalls Profilbänder, mit oder ohne erfindungsgemäß ausgeführten Querrillen, oder Profilblockreihen, welche in an sich bekannter Weise ausgeführt sind, sein. Die in Fig. 1 und Fig. 2 links vom Profilband 1 verlaufende Umfangsrille 2 ist, wie es beispielsweise Fig. 3 zeigt, von zwei in radialer Richtung R oder im Wesentlichen in radialer Richtung R verlaufenden Rillenwänden 2b und 2c und einem im Querschnitt in axialer Richtung verlaufenden Rillengrund 2a begrenzt. Der Rillengrund 2a befindet sich in der für den betreffenden Fahrzeugluftreifen vorgesehenen maximalen Profiltiefe T_{P}, die Öffnungsbreite b₂ der Umfangsrille 2 an der Oberfläche des Profilbandes 1 entspricht der Breite des Nutgrundes 2a. Die in Fig. 1 und Fig. 2 rechts vom Profilband 1 verlaufende Umfangsrille 3 ist hier beispielhaft jene, in welche eine in diesen Figuren gezeigte Querrille 4 mündet. Die Umfangsrille 3 weist, wie es insbesondere Fig. 3 zu entnehmen ist, einen sich im Querschnitt in axialer Richtung erstreckenden Rillengrund 3a und zwei Rillenwände 3b, 3c auf. Die dem Profilband 1 gegenüberliegende Rillenwand 3b verläuft in radialer Richtung R. Die Rillenwand 3c ist jene, in welche die Querrille 4 mündet und ist gegenüber der radialen Richtung geringfügig, insbesondere um einen Winkel von 1° bis 10° geneigt, derart, dass die Öffnungsbreite b₃ der Umfangsrille 3 an der Oberfläche des Profilbandes 1 eine größere axiale Erstreckung aufweist als der Rillengrund 3a. Die Breite der Umfangsrillen 2, 3 am Rillengrund 2a, 3a beträgt, wie es für derartige Umfangsrillen üblich ist, zwischen 6 mm und 18 mm, die maximale Profiltiefe T_{P} beträgt je nach Reifentyp und Reifendimension üblicherweise zwischen 6 mm und 8,5 mm.

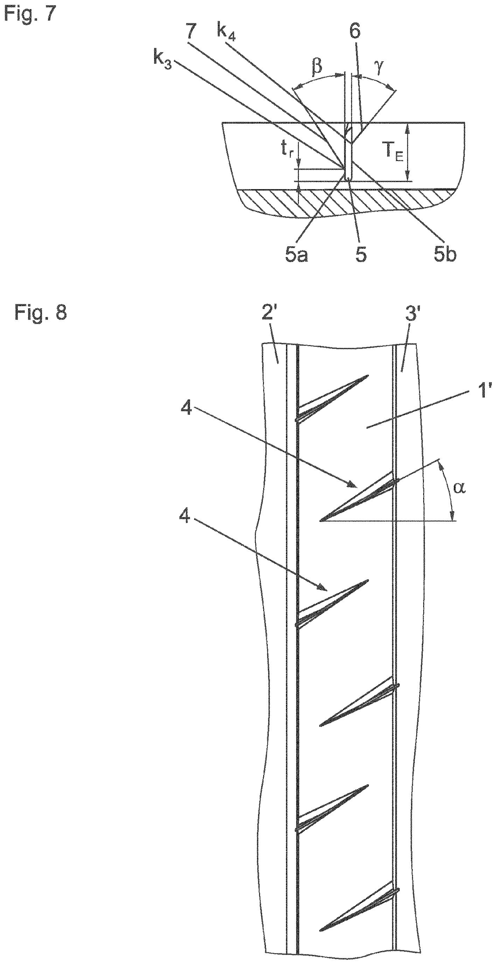

In Fig. 1 und Fig. 2 erstreckt sich die Querrille 4 beispielhaft in axialer Richtung. Wie insbesondere Fig. 8 zeigt, können erfindungsgemäß ausgeführte Querrillen 4 alternativ unter einem spitzen Winkel α zur axialen Richtung verlaufen, welcher höchstens 50°, insbesondere bis zu 35°, beträgt. In Fig. 8 beträgt der Winkel α in der Größenordnung von 30°. Der Winkel α wird zwischen der Mittellinie a in der Erstreckungsrichtung einer Basisrille 5 und der axialen Richtung ermittelt. An der Oberfläche des Profilbandes 1 weist die Querrille 4 Begrenzungskanten k₁, k₂ auf, welche in Draufsicht im Wesentlichen die Seiten eines langgestreckten, gleichseitigen Dreieckes bilden, dessen kleinster Winkel sich am Ende der Querrille 4 im Profilband 1 befindet, sodass die Breite der Querrillen 4 in Richtung Umfangsrille 3 größer wird. Die Begrenzungskante k₁ schließt mit der Mittellinie a einen Winkel β₁ ein, welcher zwischen 5° und 15° beträgt, die Begrenzungskante k₂ schließt mit der Mittellinie a einen Winkel β₂ ein, welcher um bis zu 5° größer ist als β₁. Das laufstreifeninnenseitige Ende der Querrille 4 befindet sich in einem in axialer Richtung ermittelten Abstand n von der Umfangsrille 2, welcher mindestens 5 mm beträgt. Die Querrille 4 selbst weist eine Erstreckungslänge 1 auf, welche an der Oberfläche des Profilbandes 1 ermittelt wird, und in der Größenordnung von 12 mm bis 25 mm beträgt.

Die Querrille 4 weist in Kombination die bereits erwähnte Basisrille 5 und zwei radial außerhalb der Basisrille 5 ausgebildete Rillenflanken 6, 7 auf, welche die Querrille 4 im Querschnitt trichterförmig zur Oberfläche des Profilbandes 1 verbreitern. Die Basisrille 5 befindet sich im radial inneren Bereich der Querrille 4 und erstreckt sich von der Umfangsrille 3 geradlinig in das Profilband 1 über eine Erstreckungslänge l₁ von 50 % bis 80 % der Erstreckungslänge l. Der Basisrillengrund 5c befindet sich über die Erstreckungslänge l im Wesentlichen in einer konstanten Tiefe T_{E} (Fig. 7), welche dem radialen Abstand des Einschnittgrundes 5c zur Oberfläche des Profilbandes 1 entspricht. Die Basisrille 5 weist eine konstante Breite von 0,8 mm bis 1,5 mm und zwei parallel zueinander verlaufende Basisrillenwände 5a, 5b auf. Die radiale Erstreckung der Basisrille 5 wird von der radialen Erstreckung der Basisrillenwand 5a bestimmt, die mit der Rillenflanke 7 eine gemeinsame Kante k₃ besitzt, die, wie es Fig. 5 zeigt, vom inneren Ende bis zur Rillenwand 3c "abfällt" und deren radialer Abstand c₂ zur Oberfläche des Profilbandes 1 an der Rillenwand 3c 5 mm bis 7 mm und an ihrem inneren Ende etwa 1 mm beträgt. Die Basisrillenwand 5b besitzt mit der Rillenflanke 6 eine gemeinsame Kante k₄, welche ebenfalls von ihrem inneren Ende zur Rillenwand 3c "abfällt" und deren radialer Abstand c₁ zur Oberfläche des Profilbandes 1 an der Rillenwand 3c 2 mm bis 3 mm, an ihrem inneren Ende etwa 1 mm beträgt. Die beiden Rillenflanken 6, 7 verlaufen somit, im Rillenquerschnitt betrachtet, asymmetrisch zur Mittellinie a und ferner über das Ende der Basisrille 5 im Profilband 1 hinaus bis zum Schnittpunkt der Begrenzungskanten k₁ und k₂ an der Oberfläche des Profilbandes 1. Mit der radialen Richtung schließen die Rillenflanken 6, 7 Winkel β, γ ein, die zwischen 30° und 70° gewählt werden und übereinstimmend groß sein können. Bevorzugt ist eine Ausführungsform, bei welcher der Winkel γ der flächenmäßig kleineren Rillenflanke 6 größer ist, insbesondere um mindestens 3°, als der Winkel β der Rillenflanke 7.

Fig. 8 zeigt ein Profilband 1', welches von in Umfangsrichtung umlaufenden Umfangsrillen 2', 3' begrenzt ist, welche analog zur Umfangsrille 3 ausgebildet sind. Von den Umfangsrillen 2', 3' erstrecken sich abwechselnd Querrillen 4 in das Profilband 1'. Die Querrillen 4 sind gegenüber der axialen Richtung unter dem Winkel α von etwa 30° geneigt. Bei der gezeigten Ausführungsform verlaufen sämtliche Querrillen 4 übereinstimmend schräg zur axialen Richtung.

Erfindungsgemäß ausgeführte Querrillen können auch in Profilblöcken vorgesehen werden. Die Querrillen können in Profilbändern auf spezielle Weise angeordnet werden. So ist es beispielsweise möglich, in einem Profilband zur axialen Richtung geneigt angeordnete Querrillen mit in axialer Richtung verlaufenden Querrillen zu kombinieren, beispielsweise auch bei einer abwechselnden Anordnung in Umfangsrichtung.

### Bezugsziffernliste

- 1: Profilband
- 1': Profilband
- 2: Umfangsrille
- 2': Umfangsrille
- 2a: Rillengrund
- 2b: Rillenwand
- 2c: Rillenwand
- 3: Umfangsrille
- 3': Umfangsrille
- 3a: Rillengrund
- 3b: Rillenwand
- 3c: Rillenwand
- 4: Querrille
- 5: Basisrille
- 5a: Basisrillenwand
- 5b: Basisrillenwand
- 5c: Basisrillengrund
- 6: Rillenwand
- 7: Rillenwand
- a: Mittellinie
- b₂: Öffnungsbreite
- b₃: Öffnungsbreite
- c₁: Abstand
- c₂: Abstand
- k₁: Begrenzungskante
- k₂: Begrenzungskante
- k₃: Kante
- k₄: Kante
- l: Erstreckungslänge
- l₁: Erstreckungslänge
- n: Abstand
- E: Einschnittmittelebene
- T_{E}: Einschnitttiefe
- T_{P}: Profiltiefe
- α: Winkel
- β: Winkel
- β₁: Winkel
- β₂: Winkel
- γ: Winkel

## Patentansprüche

1. Fahrzeugluftreifen mit einem Laufstreifenprofil, welches durch Umfangsrillen (2, 3, 2', 3') in in Umfangsrichtung umlaufende Profilpositive, wie Profilbänder und/oder Profilblockreihen, gegliedert ist, wobei zumindest ein Profilpositiv (1, 1') vorgesehen ist, in welchem Querrillen (4) angeordnet sind, die in eine das Profilpositiv begrenzende Umfangsrille (3) münden und deren Enden sich innerhalb des Profilbandes (1, 1') befinden, wobei die Querrillen (4) an der Oberfläche des Profilpositives von Begrenzungskanten (k₁, k₂) begrenzt sind, deren gegenseitiger Abstand in Richtung Umfangsrille (3) größer wird,
**dadurch gekennzeichnet,**
**dass** die Querrillen (4) jeweils in ihrem radial inneren Bereich eine zwischen 0,8 mm und 1,5 mm breite gerade verlaufende Basisrille (5) und in ihrem radial äußeren Bereich zwischen den Begrenzungskanten (k₁, k₂) und der Basisrille (5) verlaufende Rillenflanken (6, 7) aufweist, wobei die Basisrille (5) über ihre Erstreckung zumindest im Wesentlichen in einer konstanten Tiefe verläuft, die radiale Erstreckung der Basisrille (5) jedoch vom inneren Endbereich der Querrille (4) in Richtung Umfangsrille (3) kontinuierlich geringer wird, und wobei die eine Basisrillenwand (5b) in radialer Richtung über die andere Basisrillenwand (5a) hinausragt, so dass die zwischen den
Basisrillenwänden (5a, 5b) und den jeweiligen Rillenflanken (6, 7) gebildeten gemeinsamen Kanten auf unterschiedlichen radialen Niveaus verlaufen.

2. Fahrzeugluftreifen nach Anspruch 1 oder 2, **dadurch gekennzeichnet, dass** der radiale Abstand (c₂) der zwischen der einen Basisrillenwand (5a) und der anschließenden Rillenflanke (7) gebildeten gemeinsamen Kante (k₃) zur Oberfläche des Profilpositives (1) an der Umfangsrille (3) 5 mm bis 7 mm beträgt.

3. Fahrzeugluftreifen nach Anspruch 1 oder 2, **dadurch gekennzeichnet, dass** der radiale Abstand (c₁) der zwischen der über die Basisrille (5) hinausragenden anderen Basisrillenwand (5b) und der zweiten Rillenflanke (6) gebildeten gemeinsamen Kante (k₄) zur Oberfläche des Profilpositives (1) an der Umfangsrille (3) 2 mm bis 3 mm beträgt.

4. Fahrzeugluftreifen nach einem der Ansprüche 1 bis 3, **dadurch gekennzeichnet, dass** die gemeinsamen Kanten (k₃, k₄) am inneren Ende der Basisrille (5) einen etwa gleich großen radialen Abstand zur Oberfläche des Profilpositives (1) aufweisen, welcher kleiner ist als die radialen Abstände (c₁, c₂) an der Umfangsrille (3) und vorzugsweise höchstens 1 mm beträgt.

5. Fahrzeugluftreifen nach einem der Ansprüche 1 bis 5, **dadurch gekennzeichnet, dass** die Rillenflanken (6, 7) unter zumindest im Wesentlichen gleich großen Winkeln (β, γ) relativ zur radialen Richtung geneigte Flächen sind.

6. Fahrzeugluftreifen nach einem der Ansprüche 1 bis 5, **dadurch gekennzeichnet, dass** die an der Oberfläche des Profilpositives (1, 1') verlaufenden Begrenzungskanten (k₁, k₂) der Querrille (4) am Querrillenende spitz zusammenlaufen.

7. Fahrzeugluftreifen nach einem der Ansprüche 1 bis 6, **dadurch gekennzeichnet, dass** die Rillenflanken (6, 7) in der axialen Erstreckungsrichtung der Basisrille (5) über deren Ende im Profilpositiv (1, 1') hinaus bis zum Schnittpunkt der Begrenzungskanten (k₁, k₂) verlaufen.

8. Fahrzeugluftreifen nach einem der Ansprüche 1 bis 7, **dadurch gekennzeichnet, dass** die an der Oberfläche des Profilpositives (1, 1') vorgesehenen Begrenzungskanten (k₁, k₂) unter unterschiedlich großen spitzen Winkeln zur Mittellinie der Basisrille (5) verlaufen.

9. Fahrzeugluftreifen nach einem der Ansprüche 1 bis 8, **dadurch gekennzeichnet, dass** die Basisrille (5) einer Erstreckungslänge aufweist, die zwischen 50 % und 80% der Erstreckungslänge der Querrille (4) entspricht.

10. Fahrzeugluftreifen nach einem der Ansprüche 1 bis 9, **dadurch gekennzeichnet, dass** im Laufstreifen zumindest ein beidseitig von Umfangsrillen (2', 3') begrenztes Profilband (1') vorgesehen ist, in welches die Querrillen (4) in Umfangsrichtung abwechselnd einmünden.

11. Fahrzeugluftreifen nach einem der Ansprüche 1 bis 10, **dadurch gekennzeichnet, dass** die Querrillen (4) unter einem Winkel von bis zu 50° zur axialen Richtung verlaufen.

12. Fahrzeugluftreifen nach einem der Ansprüche 1 bis 11, **dadurch gekennzeichnet, dass** im Laufstreifen zumindest ein Profilband vorgesehen ist, in welchem sämtliche Querrillen (4) unter im Wesentlichen übereinstimmenden Winkeln zur axialen Richtung verlaufen.

## Claims

1. Pneumatic vehicle tyre with a tread profile, which is divided by circumferential grooves (2, 3, 2', 3') into profile positives running around in the circumferential direction, such as profile strips and/or rows of tread bars, there being provided at least one profile positive (1, 1') that has arranged in it transverse grooves (4) which open out into a circumferential groove (3) delimiting the profile positive and the ends of which are located within the profile strip (1, 1'), the transverse grooves (4) being delimited at the surface of the profile positive by delimiting edges (k₁, k₂), the distance between which becomes greater in the direction of the circumferential groove (3), **characterized**
**in that** the transverse grooves (4) have in each case in their radially inner region a straightrunning base groove (5) between 0.8 mm and 1.5 mm wide and have in their radially outer region groove flanks (6, 7) running between the delimiting edges (k₁, k₂) and the base groove (5), the base groove (5) running at least substantially at a constant depth over its extent, but the radial extent of the base groove (5) becoming continuously less from the inner end region of the transverse groove (4) in the direction of the circumferential groove (3), and the one base groove wall (5b) protruding beyond the other base groove wall (5a) in the radial direction, so that the common edges that are formed between the base groove walls (5a, 5b) and the respective groove flanks (6, 7) run at different radial levels.

2. Pneumatic vehicle tyre according to Claim 1 or 2, **characterized in that** the radial distance (c₂) of the common edge (k₃) that is formed between the one base groove wall (5a) and the adjoining groove flank (7) from the surface of the profile positive (1) at the circumferential groove (3) is 5 mm to 7 mm.

3. Pneumatic vehicle tyre according to Claim 1 or 2, **characterized in that** the radial distance (c₁) of the common edge (k₄) that is formed between the other base groove wall (5b), protruding beyond the base groove (5), and the second groove flank (6) from the surface of the profile positive (1) at the circumferential groove (3) is 2 mm to 3 mm.

4. Pneumatic vehicle tyre according to one of Claims 1 to 3, **characterized in that** the common edges (k₃, k₄) have at the inner end of the base groove (5) an approximately equal radial distance from the surface of the profile positive (1), which is less than the radial distances (c₁, c₂) at the circumferential groove (3) and is preferably at most 1 mm.

5. Pneumatic vehicle tyre according to one of Claims 1 to 5, **characterized in that** the groove flanks (6, 7) are surface areas that are inclined in relation to the radial direction at at least substantially equal angles (β, γ).

6. Pneumatic vehicle tyre according to one of Claims 1 to 5, **characterized in that** the delimiting edges (k₁, k₂) of the transverse groove (4) running at the surface of the profile positive (1, 1') converge to a point at the end of the transverse groove.

7. Pneumatic vehicle tyre according to one of Claims 1 to 6, **characterized in that**, in the axial direction of extent of the base groove (5), the groove flanks (6, 7) run beyond the end of the latter in the profile positive (1, 1') up to the point of intersection of the delimiting edges (k₁, k₂).

8. Pneumatic vehicle tyre according to one of Claims 1 to 7, **characterized in that** the delimiting edges (k₁, k₂) provided at the surface of the profile positive (1, 1') run at acute angles of different magnitudes with respect to the centre line of the base groove (5).

9. Pneumatic vehicle tyre according to one of Claims 1 to 8, **characterized in that** the base groove (5) has a length of extent that corresponds to between 50% and 80% of the length of extent of the transverse groove (4).

10. Pneumatic vehicle tyre according to one of Claims 1 to 9, **characterized in that** in the tread there is provided at least one profile strip (1') which is delimited on both sides by circumferential grooves (2', 3') and into which the transverse grooves (4) open out alternately in the circumferential direction.

11. Pneumatic vehicle tyre according to one of Claims 1 to 10, **characterized in that** the transverse grooves (4) run at an angle of up to 50° with respect to the axial direction.

12. Pneumatic vehicle tyre according to one of Claims 1 to 11, **characterized in that** in the tread there is provided at least one profile strip in which all of the transverse grooves (4) run at substantially coinciding angles with respect to the axial direction.

## Revendications

1. Bandage pneumatique pour roue de véhicule présentant un profil de bande de roulement formé par des rainures périphériques (2, 3, 2', 3') ménagées dans des profils positifs qui s'étendent dans la direction périphérique, par exemple des bandes profilées et/ou des rangées de blocs profilés,
au moins un profil positif (1, 1') dans lequel sont disposées des rainures transversales (4) qui débouchent dans une rainure périphérique (3) qui délimite le profil positif et dont les extrémités sont situées à l'intérieur de la bande profilée (1, 1') étant prévu,
les rainures transversales (4) étant limitées sur la surface du profil positif par des chants de délimitation (k₁, k₂) dont la distance mutuelle augmente en direction de la rainure périphérique (3),
**caractérisé en ce que**
chacune des rainures transversales (4) présente dans sa partie radialement intérieure une rainure de base (5) s'étendant en ligne droite et d'une largeur comprise entre 0,8 mm et 1,5 mm et dans sa partie radialement extérieure des flancs (6, 7) de rainure qui s'étendent entre les chants de délimitation (k₁, k₂) et la rainure de base (5),
**en ce que** la rainure de base (5) présente une profondeur au moins essentiellement constante sur toute son extension,
**en ce que** l'extension radiale de la rainure de base (5) diminue de manière continue de la partie d'extrémité intérieure de la rainure transversale (4) en direction de la rainure périphérique (3) et
**en ce que** une paroi (5b) de la rainure de base déborde dans la direction radiale au-delà de l'autre paroi (5a) de la rainure de base de telle sorte que les chants communs formés entre les parois (5a, 5b) de la rainure de base et chacun des flancs (6, 7) de la rainure s'étendent à des niveaux radiaux différents.

2. Bandage pneumatique pour roue de véhicule selon les revendications 1 ou 2, **caractérisé en ce que** la distance radiale (c₂) entre les chants communs (k₃) formés entre une paroi (5a) de la rainure de base et le flanc adjacent (7) de la rainure vers la surface du profil positif (1) vaut de 5 mm à 7 mm sur la rainure périphérique (3).

3. Bandage pneumatique pour roue de véhicule selon les revendications 1 ou 2, **caractérisé en ce que** la distance radiale (c₁) entre les chants communs (k₄) formés entre l'autre paroi (5b) de la rainure de base qui déborde au-delà de la rainure de base (5) et le deuxième flanc (6) de la rainure par rapport à la distance du profil positif (1) vaut de 2 mm à 3 mm sur la rainure périphérique (3).

4. Bandage pneumatique pour roue de véhicule selon l'une des revendications 1 à 3, **caractérisé en ce que** les chants communs (k₃, k₄) présentent à l'extrémité intérieure de la rainure de base (5) essentiellement la même distance radiale par rapport à la surface du profil positif (1), cette distance étant inférieure aux distances radiales (c₁, c₂) sur la rainure périphérique (3) et valant de préférence au plus 1 mm.

5. Bandage pneumatique pour roue de véhicule selon l'une des revendications 1 à 5, **caractérisé en ce que** les flancs (6, 7) de rainure sont des surfaces inclinées par rapport à la direction radiale à des angles (β, γ) essentiellement de même grandeur.

6. Bandage pneumatique pour roue de véhicule selon l'une des revendications 1 à 5, **caractérisé en ce que** les chants de délimitation (k₁, k₂) de la rainure transversale (4), qui s'étendent à la surface du profil positif (1, 1'), se rejoignent en pointe à l'extrémité de la rainure transversale.

7. Bandage pneumatique pour roue de véhicule selon l'une des revendications 1 à 6, **caractérisé en ce que** les flancs (6, 7) de rainure s'étendent dans la direction d'extension axiale de la rainure de base (5) au-delà de leur extrémité dans le profil positif (1, 1') jusqu'au point d'intersection avec les chants de délimitation (k₁, k₂).

8. Bandage pneumatique pour roue de véhicule selon l'une des revendications 1 à 7, **caractérisé en ce que** les chants de délimitation (k₁, k₂) prévus à la surface du profil positif (1, 1') s'étendent vers la ligne centrale de la rainure de base (5) à des angles aigus de valeurs différentes.

9. Bandage pneumatique pour roue de véhicule selon l'une des revendications 1 à 8, **caractérisé en ce que** la rainure de base (5) s'étend sur une longueur qui correspond à entre 50 % et 80 % de la longueur d'extension de la rainure transversale (4).

10. Bandage pneumatique pour roue de véhicule selon l'une des revendications 1 à 9, **caractérisé en ce qu'**au moins une bande profilée (1') délimitée des deux côtés par des rainures périphériques (2', 3') et dans laquelle les rainures transversales (4) débouchent en alternance dans la direction périphérique, est prévue dans la bande de roulement.

11. Bandage pneumatique pour roue de véhicule selon l'une des revendications 1 à 10, **caractérisé en ce que** les rainures transversales (4) forment par rapport à la direction axiale un angle de 50°.

12. Bandage pneumatique pour roue de véhicule selon l'une des revendications 1 à 11, **caractérisé en ce que** dans la bande de roulement est prévue au moins une bande profilée dans laquelle toutes les rainures transversales (4) s'étendent sous des angles essentiellement correspondants par rapport à la direction axiale.
